# FASCICULE DE BREVET EUROPEEN

(11) **EP 3 325 792 B1**
(45) Date de publication et mention de la délivrance du brevet: **23.10.2019**
(21) Numéro de dépôt: 16756723.9
(22) Date de dépôt: 21.07.2016
(51) Int. Cl.: F02K 1/76, F01D 13/02, F02C 6/02, F02K 3/072, F02K 1/60, F02K 3/06, F02K 1/70

(54) **ENSEMBLE PROPULSIF POUR AÉRONEF COMPORTANT UN INVERSEUR DE POUSSÉE**
FLUGZEUGANTRIEBSBAUGRUPPE MIT EINEM SCHUBUMKEHRER
AIRCRAFT PROPULSION ASSEMBLY COMPRISING A THRUST REVERSER

(30) Priorité: 22.07.2015 FR 1556958
(43) Date de publication de la demande: 30.05.2018
(73) Titulaire: Safran Aircraft Engines, 75015 Paris (FR)
(72) Inventeur: TANTOT, Nicolas, Jérôme, Jean, 77550 Moissy-Cramayel Cedex (FR); BEAUJARD, Antoine, Jean-Philippe, 77550 Moissy-Cramayel Cedex (FR); COAT, Pascal, 77550 Moissy-Cramayel Cedex (FR); YVON, Didier, Jean-Louis, 77550 Moissy-Cramayel Cedex (FR)
(74) Mandataire: Gevers & Orès
(86) Numéro de dépôt international: PCT/FR2016/051884
(87) Numéro de publication internationale: WO 2017/013362

(56) Documents cités:
- WO-A1-2014/092757
- WO-A2-2014/193515
- FR-A1- 2 997 681
- US-A- 2 696 079
- US-A- 3 517 898
- US-A- 4 149 374
- US-A1- 2014 053 533

## Description

### Domaine de l'invention et état de la technique :

La présente invention se rapporte notamment au domaine des turbomachines pour des aéronefs tels que des avions, notamment civils, à soufflantes contrarotatives placées en aval de la partie générateur des gaz entraînant la partie turbine couplée aux soufflantes. Elle concerne plus particulièrement des moyens permettant d'inverser la poussée et créer un freinage aérodynamique pour des turbomachines de ce type.

Le type de turbomachine concerné se retrouve, par exemple, dans une architecture d'aéronef proposée dans la demande de brevet FR-A1-2 997 681. Dans ce cas, la turbomachine est intégrée dans le prolongement du fuselage en aval de celui-ci, en vue de réduire les nuisances sonores et la consommation de carburant de l'aéronef en limitant la traînée aérodynamique par absorption de la couche limite.

Dans une telle architecture, l'aéronef est propulsé par une turbomachine à soufflantes contrarotatives carénées, la turbomachine étant intégrée à l'arrière du fuselage de l'aéronef, dans le prolongement de celui-ci, et comprenant deux générateurs de gaz qui alimentent une turbine de puissance ayant deux rotors contrarotatifs pour entraîner deux soufflantes disposées en aval des générateurs de gaz alimentées par une couronne annulaire, et des entrées d'air latérales distinctes pour alimenter chaque générateur de gaz. La couronne d'alimentation annulaire des soufflantes est disposée de manière à absorber une partie au moins de la couche limite formée autour du fuselage de l'aéronef. La nacelle des soufflantes a ici un diamètre sensiblement égal à celui de la plus grande section du fuselage de l'aéronef et entoure la turbine de puissance.

Comme pour d'autres types d'appareils, il existe un besoin d'équiper l'aéronef d'un système d'inversion de poussée de la turbomachine. Compte tenu de la disposition de la nacelle entourant les soufflantes, en queue de l'aéronef, il est problématique d'équiper cette nacelle de dispositifs mobiles permettant, de manière connue, soit de modifier la section de sortie, soit de refouler l'air sortant des soufflantes. En effet, on ne trouve à proximité de cette zone aucune structure permettant de reprendre les efforts engendrés sur la nacelle. Des turbomachines équipées d'un système d'inversion de poussée sont connues des documents US 2014/053533, WO 2014/193515 et WO 2014/092757.

La présente invention a pour objet de fournir une solution adaptée pour inverser facilement la poussée d'une turbomachine dont la ou les soufflantes se trouvent en aval du générateur de gaz, notamment dans une architecture d'aéronef évoquée ci-dessus.

### Exposé de l'invention :

A cet effet, l'invention concerne un ensemble propulsif pour un aéronef selon la revendication 1, comprenant une turbomachine comportant au moins un générateur de gaz configuré pour générer un flux primaire, au moins une turbine de puissance, une veine centrale qui alimente la turbine de puissance par le flux primaire, ladite veine centrale étant entourée par un capotage extérieur et ladite turbine de puissance entraînant à sa périphérie au moins un rotor de soufflante, et des premier moyens mobiles agencés pour dévier au moins une partie du flux primaire à l'extérieur dudit capotage extérieur et vers l'amont de la turbomachine pour générer une inversion de poussée, la veine centrale étant en amont de la turbine de puissance et les premiers moyens mobiles étant agencés en amont de la turbine de puissance.

Dans la présente demande, on entend par capotage extérieur, un capotage de l'ensemble propulsif qui est agencé pour être balayé par un flux d'air extérieur à au moins une partie de l'ensemble propulsif, en particulier un flux d'air s'écoulant autour de la veine centrale. Les rotors de soufflantes sont généralement dans le prolongement de ce capotage extérieur, de sorte que le flux d'air extérieur balayant le capotage extérieur entre dans ces dernières.

En déviant le flux primaire vers l'amont, lesdits premiers moyens mobiles créent une inversion de poussée liée au changement de direction de ce flux. Par ailleurs, étant en amont de la turbine de puissance, ces premiers moyens mobiles peuvent arrêter l'alimentation de la turbine lorsqu'ils dévient le flux primaire. La poussée de la turbomachine due aux rotors de soufflante peut donc, dans ce cas, être annulée.

Suivant une caractéristique de l'invention, la section de la veine centrale est circulaire.

Avantageusement, les premiers moyens mobiles comportent au moins deux portes intérieures configurées pour pivoter entre une première position où elles forment des parois de ladite veine centrale et une deuxième position où elles bloquent au moins en partie la veine centrale et dévient au moins une partie du flux primaire vers le capotage extérieur. Cela permet de dévier le flux primaire d'une part, et d'autre part d'éviter l'alimentation du propulseur.

De préférence, ledit ensemble comporte également des second moyens mobiles agencés pour bloquer au moins en partie le passage d'un écoulement autour dudit capotage extérieur vers ledit au moins un rotor de soufflante.

Avantageusement, les seconds moyens mobiles comportent au moins deux portes extérieures configurées pour pivoter entre une première position, où elles forment une partie dudit capotage extérieur, et une deuxième position, où un bord amont desdites portes extérieures s'écarte du capotage extérieur pour bloquer au moins en partie le passage dudit écoulement. Cette configuration permet de dévier le flux secondaire. Cette configuration permet également de ne pas alimenter le propulseur.

Plus préférentiellement, le bord amont des portes extérieures, placées dans leur deuxième position, s'étend radialement au moins jusqu'à sensiblement la périphérie externe dudit au moins un rotor de soufflante, par rapport à un axe de rotation de ce dernier.

Compte tenu du rayon généralement important du rotor de soufflante d'un turboréacteur, les moyens capables d'obstruer au moins partiellement l'arrivée d'air dans le rotor de soufflante opposent une surface importante à l'écoulement incident et forment donc des aérofreins performants.

Avantageusement, les portes intérieures et les portes extérieures sont agencées pour procurer, lorsqu'elles sont chacune dans leur deuxième position, un passage depuis la veine centrale jusqu'à l'extérieur du capotage externe, pour la partie du flux primaire déviée par les portes intérieures.

Selon un aspect de l'invention, un dispositif articule le mouvement de chaque porte intérieure à celui d'au moins une porte extérieure, et est agencé de manière à ce que les première et deuxième positions de l'une correspondent aux première et deuxième positions de l'autre, respectivement.

Ce dispositif permet, notamment, d'actionner les deux portes avec un seul vérin, par exemple.

Avantageusement, l'écoulement du flux secondaire n'est pas caréné extérieurement au niveau de la veine centrale de flux primaire.

Avantageusement, l'écoulement des flux primaire et secondaire est orienté dans la même direction.

L'invention concerne également un aéronef comportant un tel ensemble propulsif.

Préférentiellement, il s'agit d'un aéronef comportant un fuselage et propulsé par un ensemble tel que décrit précédemment, une partie du fuselage formant ledit capotage externe et ladite turbomachine comprenant deux rotors de soufflante coaxiaux, respectivement amont et aval, entrainées par deux rotors contrarotatifs de la turbine de puissance, les deux hélices de soufflante et la turbine étant intégrées dans une nacelle à l'aval du fuselage, dans le prolongement de celui-ci.

Avantageusement, dans ledit aéronef, des entrées d'air du ou des générateurs de gaz ont des parois internes directement intégrées au fuselage.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente une vue schématique en coupe longitudinale de la partie arrière d'un aéronef équipé d'une turbomachine selon l'invention ;
- la figure 2 présente schématiquement sur l'ensemble de la figure 1 des moyens d'inversion de poussée selon l'invention en mode escamoté ;
- la figure 3 présente schématiquement sur l'ensemble de la figure 1 des moyens d'inversion de poussée selon l'invention en mode déployé ; et
- la figure 4 présente schématiquement une vue latérale d'une turbomachine équipée d'un inverseur de poussée selon l'art antérieur.

### Description d'un mode de réalisation :

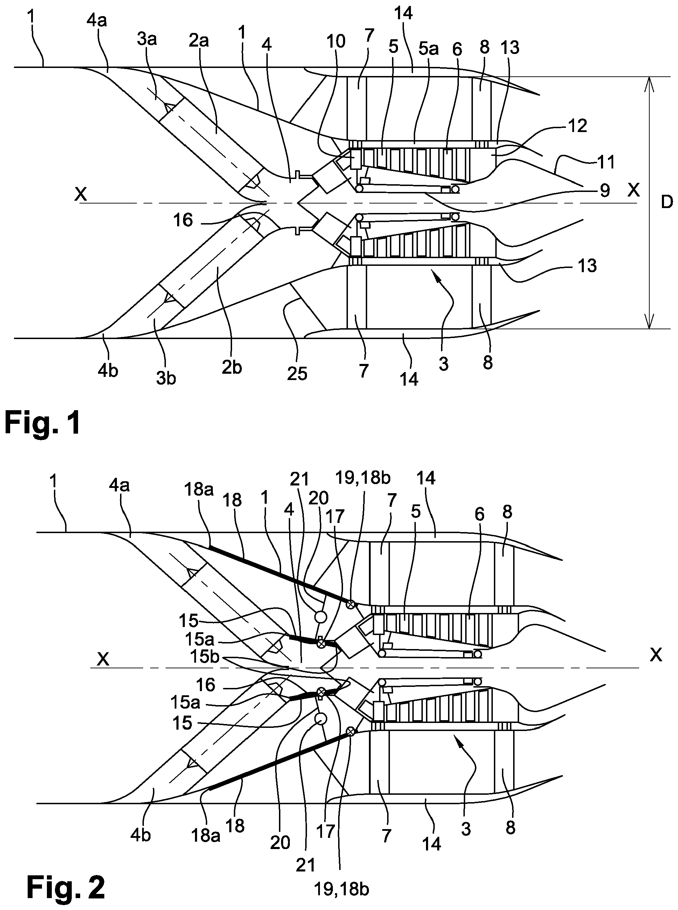

L'invention s'applique en particulier à un aéronef tel qu'un avion comportant une turbomachine du type de celle représentée sur la figure 1.

Comme représenté sur la figure 1, la turbomachine est centrée sur l'axe longitudinal XX du fuselage 1 de l'aéronef. Cette turbomachine comprend, d'amont en aval, dans le sens d'écoulement des gaz, deux générateurs de gaz distincts 2a, 2b alimentant simultanément une unique turbine de puissance 3. La turbomachine est installée à l'extrémité avale du fuselage 1 de l'aéronef.

Dans ce document, les dénominations axiales et radiales se réfèrent à l'axe XX du fuselage et de la turbomachine. De même, les termes amont et aval se réfèrent à la direction de l'écoulement principal le long de cet axe.

De façon connue en soi, chaque générateur de gaz 2a, 2b comprend au moins un compresseur, une chambre de combustion et au moins une turbine (non représentés sur les figures).

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b. Sur l'exemple présenté, les entrées d'air 4a, 4b sont reliées au fuselage 1 de l'aéronef, en amont des générateurs de gaz 2a, 2b, et leur paroi interne est directement intégrée au fuselage 1. Elles absorbent ainsi une partie de la couche limite formée autour du fuselage 1 de l'aéronef. Dans une autre configuration, non représentée, les entrées d'air latérales alimentant chacun des générateurs de gaz peuvent être, au contraire, écartées du fuselage 1 de l'aéronef, de manière à minimiser ce phénomène d'absorption de la couche limite et à faciliter le fonctionnement des générateurs de gaz. Il est également envisageable d'utiliser plus de deux générateurs de gaz, par exemple trois pour alimenter la turbine de puissance 3.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. En d'autres termes, la turbine de puissance 3 est alimentée par le flux primaire du générateur de gaz en sortie de la veine centrale 4. La veine centrale 4 est agencée à l'amont de la turbine de puissance. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est munie de deux rotors 5, 6 de turbine contrarotatifs pour entraîner de façon contrarotative deux rotors de soufflante 7, 8. Ces rotors de turbine 5, 6 sont coaxiaux et centrés sur l'axe longitudinal XX. Ils tournent autour d'un carter intérieur 9 fixé à la structure de l'aéronef. Nous comprenons que ces portes 15 sont montées en amont de la turbine de puissance 3.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les rotors de soufflante 7,8. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5.

En aval de la turbine de puissance 3, la partie radialement interne du deuxième rotor 6 se prolonge par un corps central 11. D'autre part, elle est reliée, par des bras support 12, à un anneau 13 de support des aubes du rotor de soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, un premier rotor de soufflante 7, amont, est positionné au niveau de l'entrée de la turbine de puissance 3. Il est relié au premier rotor 5 de turbine 3 au niveau des bras 10 qui soutiennent en amont le corps extérieur cylindrique 5a. Ce rotor de soufflante amont 7 tourne donc à la même vitesse que le premier rotor 5 de la turbine de puissance 3.

Sur le même exemple, le deuxième rotor de soufflante 8, aval, est positionné au niveau de la sortie de la turbine de puissance 3. Il est relié au deuxième rotor 6 de turbine 3 au niveau de l'anneau de support 13 et des bras 12 qui le soutiennent. Ce rotor de soufflante aval 8 tourne donc à la même vitesse que le deuxième rotor 6 de la turbine de puissance 3.

Les deux soufflantes 7, 8 sont carénées par une nacelle 14 fixée à la structure de l'aéronef. Cette nacelle 14 peut être fixée, par exemple, à l'empennage vertical de l'aéronef, non représenté sur les figures. Les soufflantes présentent un diamètre externe D qui est proche du diamètre externe le plus élevé du fuselage 1 de l'aéronef.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique, notamment pour que la vitesse en tête d'aube soit subsonique.

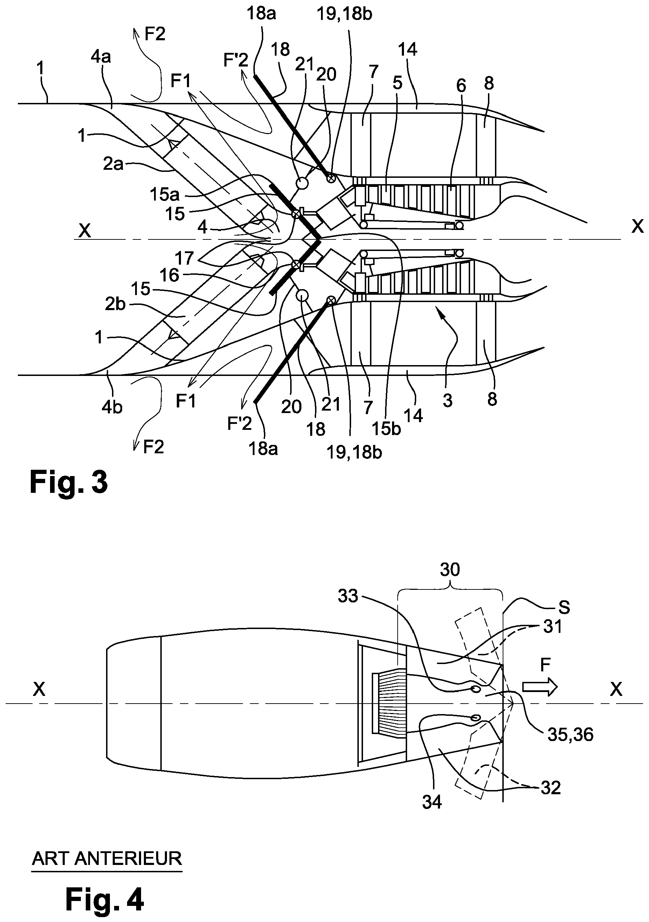

Selon un aspect de l'invention, la veine centrale ayant une section sensiblement circulaire autour de l'axe XX, sa paroi est formée par une structure fixe 16, par exemple un carter central 16 lié à la structure de l'avion, qui comporte des portes intérieures basculantes 15. Sur la figure 2, ces portes intérieures 15 se trouvent dans une première position, escamotée, pour laquelle elles forment des portions de la paroi de la veine centrale primaire 4, en coopération avec le carter central 16. Dans cette position, les portes intérieures 15 forment une découpe dans la paroi de la veine, de forme allongée suivant l'axe XX avec une largeur sensiblement constante. Chaque porte intérieure 15 présente notamment un bord amont 15a et un bord aval 15b qui sont dans la continuité de la paroi formée par le carter 16 en amont et en aval de la porte 15. Sur la figure 3, les portes intérieures 15 se trouvent dans une deuxième position, déployée, où leurs bords aval 15b se rapprochent de l'axe XX, les bords amont 15a s'écartant radialement de cet axe XX. Pour passer d'une position à l'autre, chaque porte intérieure 15 est montée pivotante autour d'un axe 17, perpendiculaire à l'axe XX et situé dans une position sensiblement intermédiaire entre les bords amont 15a et aval 15b de ladite porte 15.

La géométrie des portes intérieures 15 et la position des axes de pivotement 17 sont agencées pour que, lorsque les portes intérieures 15 sont en position déployée, leurs bords aval 15b se rejoignent de manière à obstruer au moins partiellement le passage du flux primaire vers l'aval. Dans ces conditions, le flux primaire est en partie refoulé vers l'amont, en suivant l'inclinaison par rapport à l'axe XX des portes intérieures 15 déployées et passe par l'ouverture de la paroi de la veine centrale primaire 4 pratiquée par le déploiement des portes 15. Le flux primaire est dévié radialement vers l'extérieur et vers l'amont, comme représenté par les flèches F1 sur la figure 3. Cela permet de créer une poussée négative par l'inversion du flux primaire, propre à freiner l'avion.

Par ailleurs, les rotors 5, 6, de la turbine de puissance ne sont plus entraînés. Les rotors de soufflante 7, 8 cessent donc de propulser le flux secondaire entrant dans la nacelle 4.

Dans la présente invention, les flux primaire et secondaire traversent la turbomachine d'amont en aval. En d'autres termes, les flux primaire et secondaire s'écoulent dans la même direction.

Les portes intérieures basculantes 15 peuvent être, par exemple, au nombre de deux et réalisées selon une technologie utilisée pour l'inversion de poussée en sortie d'une tuyère d'éjection pour un turboréacteur à flux mélangé et dont des exemples sont décrits dans le document FR-B1-2957634 ou le document FR-A1-2764000.

En référence à la figure 4, dans ces exemples, la tuyère de sortie 30 du turboréacteur est essentiellement de section circulaire autour de l'axe XX du turboréacteur. La tuyère 30 est représentée convergente mais les formes peuvent être adaptées à d'autres évolutions de la section de la veine. Le système d'inversion de poussée occupe la partie aval de la tuyère 30 jusqu'au bord de sa section de sortie S. Une porte supérieure 31 et une porte inférieure 32 sont montées pivotantes sur des axes horizontaux 33, 34. Ces axes sont maintenus par des poutres latérale 35, 36 (l'une des poutres latérales n'est pas visible sur la figure), qui forment la paroi de la tuyère 30 avec les portes 31, 32 lorsqu'elles sont en position escamotée. Les documents FR-B1-2957634 et FR-A1-2764000 fournissent des exemples d'agencements géométriques de la découpe des portes basculantes 33, 34 par rapport aux poutres 35, 36, ainsi que d'éventuels dispositifs au niveau des bords aval, pour que ces portes 33, 34 ferment le passage vers l'aval du flux de gaz sortant de la tuyère 30, lorsqu'elles sont en position déployée (indiquée en traits discontinus sur la figure 4).

Les exemples cités ne doivent être pris qu'à titre d'illustration. La mise en oeuvre de l'invention peut également faire intervenir plus de deux portes pivotantes. Il entre dans les compétences de l'homme du métier d'adapter les géométries pour fermer le passage vers l'aval au flux primaire et le dévier vers l'amont.

Dans un aéronef considéré par l'invention, la forme de la veine centrale primaire 4 ne suit généralement pas la forme du fuselage 1. Le fuselage 1 est, de plus, généralement éloigné radialement de la veine primaire centrale 4.

Une première solution peut être d'équiper le fuselage 1 de grilles sur le trajet du flux primaire dévié F1, aptes à s'ouvrir lorsque les portes intérieures 15 sont déployées.

De manière préférée et selon un deuxième aspect de l'invention, le fuselage 1 comporte également des portes extérieures basculantes 18. En référence à la figure 2, ces portes extérieures 18 ont une première position escamotée, dans laquelle elles forment la continuité du fuselage 1 pour guider le flux secondaire, ici le flux d'air extérieur longeant le fuselage 1, vers les rotors de soufflante 7, 8. Dans cette position, les portes extérieures 18 forment une découpe dans le fuselage 1, pouvant avoir une forme sensiblement parallélépipédique allongée suivant l'axe XX. Chaque porte extérieure 18 présente notamment un bord amont 18a et un bord aval 18b qui sont dans la continuité de la paroi formée par le carter 16 en amont et en aval des portes 15. En référence à la figure 3, chaque porte extérieure 18 peut être placée dans une position déployée en pivotant autour d'un axe 19 perpendiculaire à l'axe XX, situé sensiblement près du bord aval 18b de ladite porte 18. Dans cette position déployée, le bord aval 18b reste donc sensiblement au niveau du fuselage 1, tandis que le bord amont 18a s'écarte largement, radialement de cet axe XX vers l'extérieur.

Avantageusement, les ouvertures pratiquées dans le fuselage 1 lorsque les portes extérieures 18 sont déployées laissent un libre passage au flux primaire F1 dévié par les portes intérieures 15 en position déployée. Le flux primaire F1, en s'échappant radialement vers l'extérieur, dévie une première partie F2 du flux d'air longeant le fuselage 1. Nous comprenons que les portes 18 sont agencées en amont des soufflantes 7, 8. En particulier, ces portes 18 sont agencées en amont d'un plan qui est perpendiculaire à l'axe XX et disposé en amont de la turbine de puissance 3.

Par ailleurs, les ouvertures dans le fuselage 1 s'arrêtent en aval des entrées d'air 4a, 4b des générateurs de gaz 2a, 2b afin d'éviter tout risque de réingestion des gaz chauds déviés dans les générateurs de gaz 2a, 2b. De plus, la forme du passage du flux d'air primaire dévié F1 entre la veine centrale 4 et le fuselage 1 est conformée de telle sorte que le flux d'air primaire dévié F1 ne gêne pas l'alimentation des générateurs de gaz 2a, 2b par lesdites entrées d'air 4a, 4b.

De préférence, le bord amont 18a de chaque porte extérieure 18 étant placé assez loin en amont pour dégager le passage du flux primaire dévié F1, son bord aval 18b est situé proche du premier rotor de soufflante 7. L'extension obtenue pour la porte extérieure 18 est telle que, en position déployée, son bord amont 18a s'étend radialement au-delà de la nacelle 4. De cette manière, les portes extérieures 18 peuvent bloquer, au moins en majeure partie, le passage du flux secondaire vers les rotors de soufflante 7, 8. Dans cette position, les portes extérieures 18 forment des aérofreins qui dévient une partie F'2 de l'air extérieur non arrêtée par le flux primaire dévié F1, et qui empêchent l'entraînement des rotors de soufflante 7, 8. Elles participent donc au freinage de l'avion.

Dans un mode de réalisation, il est possible d'utiliser le même nombre de portes extérieures 18 que de portes intérieures 15, en faisant coïncider leurs positions pour le passage du flux primaire F1 dévié au travers du fuselage 1. Il est possible également de prévoir un nombre supérieur de portes extérieures 18 pour mieux sectoriser leur ouverture, compte tenu de leur extension longitudinale.

Des portes basculantes sectorisées sur le fuselage 1 peuvent être réalisées selon des techniques connues, le document FR-B1-2706536 montrant un exemple de réalisation de portes de ce type dans un carter intermédiaire ou une nacelle.

Lorsque les nombres de portes intérieures 15 et de portes extérieures 18 sont égaux, celles-ci se correspondent respectivement deux à deux pour laisser passer le flux primaire dévié F1. Dans ce cas, selon un autre aspect de l'invention, une structure rigide apte à transmettre des efforts longitudinaux, par exemple une bielle 20, est montée de manière rotulée entre une porte intérieure 15 et la porte externe 18 correspondante. Cela permet de coordonner le mouvement de la porte intérieure 15, en rotation autour de l'axe 17 comme décrit précédemment, avec le mouvement de la porte extérieure 18 correspondante, en rotation autour de l'axe 19, pour qu'elles se déploient en même temps, de manière à laisser le passage libre au flux primaire dévié F1. Préférentiellement les axes de rotation sont tangentiels à leurs portes respectives.

De manière préférée, ladite bielle 20 est liée à un vérin 21 fixé à la structure de l'avion, entre le fuselage 1 et la veine centrale primaire 4. Un seul vérin 21 permet donc d'actionner les deux portes. De plus, l'ensemble du mécanisme peut être placé dans un volume intérieur au fuselage 1, situé entre les générateurs de gaz 2a, 2b et la turbine de puissance 3, qui est normalement peu encombré.

L'invention a été présentée de manière préférentielle dans le cas d'une turbomachine intégrée à la pointe arrière d'un fuselage d'un avion. Cependant elle peut être utilisée plus généralement dans le cas où le turboréacteur comporte la soufflante en aval du générateur de gaz, la turbine de puissance étant reliée à ce dernier par une veine centrale primaire. Les portes basculantes intérieures et extérieures peuvent être alors supportées par un carter intermédiaire formant les parois de la veine centrale et les parois radialement internes de l'écoulement entrant dans le rotor de soufflante.

## Revendications

1. Ensemble propulsif pour un aéronef, l'ensemble propulsif comprenant:
- au moins un rotor de soufflante (7,8) d'axe longitudinal XX,
- au moins deux générateurs de gaz (2a, 2b) logés chacun dans une veine d'écoulement primaire et configurés pour générer chacun un flux primaire, chaque générateur de gaz (2a, 2b) comprenant au moins un compresseur, une chambre de combustion et au moins une turbine,
- au moins une turbine de puissance (3) entraînant à sa périphérie ledit au moins un rotor de soufflante (7, 8) d'axe longitudinal XX,
- une veine centrale (4) depuis laquelle convergent les veines d'écoulement primaire de chaque générateur de gaz et qui alimente la turbine de puissance (3) par le flux primaire, ladite veine centrale (4) étant entourée par un capotage extérieur (1), la veine centrale (4) étant agencée en amont de la turbine de puissance (3) par rapport à l'axe longitudinal XX,
**caractérisé en ce qu'**il comprend des premier moyens mobiles (15, 18) agencés pour dévier au moins une partie du flux primaire (F1) à l'extérieur dudit capotage extérieur (1) et vers l'amont de la turbomachine pour générer une inversion de poussée, les premiers moyens mobiles (15, 18) étant agencés en amont de la turbine de puissance (3) par rapport à l'axe longitudinal XX.

2. Ensemble propulsif selon la revendication 1, dans lequel les premiers moyens mobiles (15) comportent au moins deux portes intérieures (15) configurées pour pivoter entre une première position où elles forment des parois de ladite veine centrale (4) et une deuxième position où elles bloquent au moins en partie la veine centrale et dévient au moins une partie du flux primaire (F1) vers le capotage extérieur (1).

3. Ensemble propulsif selon l'une des revendications précédentes, comportant également des seconds moyens (18) mobiles agencés pour bloquer au moins en partie le passage d'un écoulement autour dudit capotage extérieur (1) vers ledit au moins un rotor de soufflante (7, 8).

4. Ensemble selon la revendication 3, dans lequel les seconds moyens mobiles (18) comportent au moins deux portes extérieures (18) configurées pour pivoter entre une première position, où elles forment une partie dudit capotage extérieur (1), et une deuxième position, où un bord amont (18a) desdites portes extérieures (18) s'écarte du capotage extérieur (1) pour bloquer au moins en partie le passage dudit écoulement.

5. Ensemble propulsif selon la revendication 4, dans lequel le bord amont (18a) des portes extérieures (18), placées dans leur deuxième position, s'étend radialement au moins jusqu'à sensiblement la périphérie externe dudit au moins un rotor de soufflante (7, 8), par rapport à un axe (XX) de rotation de cette dernière.

6. Ensemble propulsif selon la revendication 4 ou 5, en combinaison avec la revendication 2, dans lequel les portes intérieures (15) et les portes extérieures (18) sont agencées pour procurer, lorsqu'elles sont chacune dans leur deuxième position, un passage, depuis la veine centrale (4) jusqu'à l'extérieur du capotage externe (1), pour la partie du flux primaire (F1) déviée par les portes intérieures (15).

7. Ensemble selon la revendication 6, comportant un dispositif (20) articulant le mouvement de chaque porte intérieure (15) à celui d'au moins une porte extérieure (18), et agencé de manière à ce que les première et deuxième positions de l'une correspondent aux première et deuxième positions de l'autre, respectivement.

8. Aéronef comprenant un ensemble selon l'une des revendications précédentes.

9. Aéronef comportant un fuselage (1) et propulsé par un ensemble propulsif selon l'une des revendications 1 à 7, au moins une partie du fuselage (1) formant ledit capotage externe (1) et l'ensemble propulsif comprenant deux rotors de soufflante coaxiaux (7,8), respectivement amont et aval, entrainées par deux rotors contrarotatifs (5, 6) de la turbine de puissance (3), les deux rotors de soufflante (7, 8) et la turbine (3) étant intégrés dans une nacelle (14) à l'aval du fuselage (1), dans le prolongement de celui-ci.

10. Aéronef selon la revendication précédente, dans lequel des entrées d'air (4a, 4b) du ou des générateurs de gaz (2a, 2b) ont des parois internes directement intégrées au fuselage (1).

## Patentansprüche

1. Flugzeugantriebseinheit für ein Flugzeug, wobei die Flugzeugantriebseinheit umfasst:
- mindestens einen Gebläserotor (7, 8) mit Längsachse XX,
- mindestens zwei Gasgeneratoren (2a, 2b), die jeweils in einer Primärströmungsbahn aufgenommen sind und konfiguriert sind, um jeweils einen Primärstrom zu erzeugen, wobei jeder Gasgenerator (2a, 2b) mindestens einen Kompressor, eine Brennkammer und mindestens eine Turbine umfasst,
- mindestens eine Leistungsturbine (3), die an ihrem Umfang den mindestens einen Gebläserotor (7, 8) mit Längsachse XX antreibt,
- eine mittlere Bahn (4), aus der die Primärströmungsbahnen jedes Gasgenerators zusammenlaufen und die die Leistungsturbine (3) über den Primärstrom speist, wobei die mittlere Bahn (4) von einer äußeren Verkleidung (1) umgeben ist, wobei die mittlere Bahn (4) in Bezug auf die Längsachse XX stromaufwärts der Leistungsturbine (3) angeordnet ist,
**dadurch gekennzeichnet, dass** sie erste bewegliche Mittel (15, 18) umfasst, die angeordnet sind, um mindestens einen Teil des Primärstroms (F1) auf die Außenseite der äußeren Verkleidung (1) und stromaufwärts der Turbomaschine umzuleiten, um eine Schubumkehr zu erzeugen, wobei die ersten beweglichen Mittel (15, 18) in Bezug auf die Längsachse XX stromaufwärts der Leistungsturbine (3) angeordnet sind.

2. Flugzeugantriebseinheit nach Anspruch 1, wobei die ersten beweglichen Mittel (15) mindestens zwei innere Türen (15) beinhalten, die konfiguriert sind, um zwischen einer ersten Position, in der sie Wände der mittleren Bahn (4) bilden, und einer zweiten Position, in der sie mindestens teilweise die mittlere Bahn blockieren und mindestens einen Teil des Primärstroms (F1) zur äußeren Verkleidung (1) umleiten, zu schwenken.

3. Flugzeugantriebseinheit nach einem der vorstehenden Ansprüche, ebenfalls zweite bewegliche Mittel (18) beinhaltend, die angeordnet sind, um mindestens teilweise den Durchgang einer Strömung um die äußere Verkleidung (1) zum mindestens einen Gebläserotor (7, 8) zu blockieren.

4. Flugzeugantriebseinheit nach Anspruch 3, wobei die zweiten beweglichen Mittel (18) mindestens zwei äußere Türen (18) beinhalten, die konfiguriert sind, um zwischen einer ersten Position, in der sie einen Teil der äußeren Verkleidung (1) bilden, und einer zweiten Position, in der sich ein stromaufwärtiger Rand (18a) der äußeren Türen (18) von der äußeren Verkleidung (1) abspreizt, um mindestens teilweise den Durchgang der Strömung zu blockieren, zu schwenken.

5. Flugzeugantriebseinheit nach Anspruch 4, wobei sich der stromaufwärtige Rand (18a) der äußeren Türen (18), in ihrer zweiten Position platziert, radial mindestens bis im Wesentlichen zum äußeren Umfang des mindestens einen Gebläserotors (7, 8), in Bezug auf eine Drehachse (XX) dieses letzteren, erstreckt.

6. Flugzeugantriebseinheit nach Anspruch 4 oder 5, in Kombination mit Anspruch 2, wobei die inneren Türen (15) und die äußeren Türen (18) angeordnet sind, um, wenn sie jeweils in ihrer zweiten Position sind, ausgehend vom mittleren Strom (4) bis zur Außenseite der äußeren Verkleidung (1), für den Teil des Primärstroms (F1), der von den inneren Türen (15) umgeleitet ist, einen Durchgang zu verschaffen.

7. Flugzeugantriebseinheit nach Anspruch 6, eine Vorrichtung (20) beinhaltend, die die Bewegung jeder inneren Tür (15) mit jener mindestens einer äußeren Tür (18) anlenkt, und angeordnet, sodass die erste und zweite Position der einen jeweils de ersten und zweite Positionen der anderen entsprechen.

8. Flugzeug, umfassend eine Einheit nach einem der vorstehenden Ansprüche.

9. Flugzeug, einen Rumpf (1) beinhaltend, und angetrieben von einer Flugzeugantriebseinheit nach einem der Ansprüche 1 bis 7, wobei mindestens ein Teil des Rumpfs (1) die äußere Verkleidung (1) bildet und die Flugzeugantriebseinheit zwei koaxiale, jeweils stromaufwärtige und stromabwärtige, Gebläserotoren (7, 8) umfasst, von zwei gegendrehenden Rotoren (5, 6) der Leistungsturbine (3) angetrieben, wobei die beiden Gebläserotoren (7, 8) und die Turbine (3) in einer Gondel (14) stromabwärts des Rumpfs (1) in der Verlängerung desselben eingebaut sind.

10. Flugzeug nach dem vorstehenden Anspruch, wobei die Lufteingänge (4a, 4b) des oder der Gasgeneratoren (2a, 2b) direkt in den Rumpf (1) eingebaute innere Wände aufweisen.

## Claims

1. Propulsion unit for an aircraft, said propulsion unit comprising:
- at least a fan rotor (7, 8) having a longitudinal axis XX,
- at least two gas generator (2a, 2b) housed each in a primary flow duct (3a, 3b) and designed to generate each a primary flow, each gas generator (2a, 2b) comprising at least a compressor, a combustion chamber and at least one turbine,
- at least one power turbine (3) driving at its periphery said fan rotor (7, 8) of longitudinal axis XX,
- a central duct (4) from which converge the primary flow duct of each gas generator and that feeds the power turbine (3) with the primary flow, said central duct (4) being surrounded by an external fairing (1), said central duct (4) being upstream of the power turbine (3) with regard to the longitudinal axis XX,
**characterized in that** it comprises first movable means (15, 18) arranged so as to divert at least part of the primary flow (F1) to the outside of said external fairing (1) and upstream of the turbine engine in order to generate thrust reversal, the first movable means (15, 18) being arranged upstream of the power turbine (3) with regard to the longitudinal axis XX.

2. Propulsion unit according to claim 1, wherein the first movable means (15) comprise at least two inner doors (15) designed to pivot between a first position, in which they form walls of said central duct (4), and a second position, in which they block at least part of the central duct and divert at least part of the primary flow (F1) towards the external fairing (1).

3. Propulsion unit according to any of the preceding claims, also comprising second movable means (18) arranged so as to block at least part of a flow passing around said external fairing (1) towards said at least one fan rotor (7, 8).

4. Unit according to claim 3, wherein the second movable means (18) comprise at least two outer doors (18) designed to pivot between a first position, in which they form part of said external fairing (1), and a second position, in which an upstream edge (18a) of said outer doors (18) moves away from the external fairing (1) in order to block at least part of said flow passing through.

5. Propulsion unit according to claim 4, wherein, when the outer doors (18) are in their second position, the upstream edge (18a) thereof extends radially at least up to substantially the external periphery of said at least one fan rotor (7, 8) in relation to a rotational axis (XX) of said fan.

6. Propulsion unit according to claim 4 or claim 5, in conjunction with claim 2, wherein the inner doors (15) and the outer doors (18) are arranged such that, when they are all in their second position, they provide a passage from the central duct (4) to the outside of the external fairing (1) for the portion of the primary flow (F1) diverted by the inner doors (15).

7. Unit according to claim 6, comprising a device (20) that links the movement of each inner door (15) to that of at least one outer door (18) and is arranged such that the first and second positions of one door correspond to the first and second positions of the other, respectively.

8. Aircraft comprising a unit according to any of the preceding claims.

9. Aircraft that comprises a fuselage (1) and is propelled by a propulsion unit according to any of claims 1 to 7, at least one portion of said fuselage (1) forming said external fairing (1) and said propulsion unit comprising two coaxial fan rotors (7, 8), one upstream and one downstream, that are driven by two contra-rotating rotors (5, 6) of the power turbine (3), the two fan rotors (7, 8) and the turbine (3) being incorporated in a nacelle (14) downstream of the fuselage (1), in the extension of the fuselage.

10. Aircraft according to the preceding claim, wherein air intakes (4a, 4b) of the gas generator(s) (2a, 2b) have internal walls directly incorporated in the fuselage (1).
